Europäisches Patentamt

European Patent Office

Office européen des brevets

(19)

(11) Veröffentlichungsnummer: **0 033 460**

**A1**

(12) # EUROPÄISCHE PATENTANMELDUNG

(21) Anmeldenummer: **81100337.5**

(22) Anmeldetag: **17.01.81**

(51) Int. Cl.³: **B 01 D 53/34**

(30) Priorität: **31.01.80 DE 3003378**

(43) Veröffentlichungstag der Anmeldung:
**12.08.81 Patentblatt 81/32**

(84) Benannte Vertragsstaaten:
**AT BE DE FR GB IT NL**

(71) Anmelder: **WINTERSHALL AKTIENGESELLSCHAFT**
**Postfach 10 40 20 Friedrich-Ebert-Strasse 160**
**D-3500 Kassel(DE)**

(72) Erfinder: **Rost, Wolfgang Dr. Dipl.-Chem.**
**Birkenallee 46**
**D-4450 Lingen 1(DE)**

(72) Erfinder: **Wilken, Heinrich**
**Bienerstrasse 79**
**D-4450 Lingen 3(DE)**

(54) Verfahren zum Eliminieren von sauren Gasen aus den wasserstoffreichen Abgasen des katalytischen Reformierens von Benzinkohlenwasserstoffen.

(57) Zum Eliminieren von sauren Gasen aus den wasserstoffreichen Abgasen des katalytischen Reformierens von Benzinkohlenwasserstoffen wird in den Strom dieses Abgases eine Lösung von Diäthanolamin in einen Alkohol bzw. ein Alkoholgemisch injiziert und nach kurzer Verweilzeit davon wieder getrennt.

./...

EP 0 033 460 A1

Croydon Printing Company Ltd.

- 1 -

<u>Verfahren zum Eliminieren von sauren Gasen aus</u>
<u>den wasserstoffreichen Abgasen des katalytischen</u>
<u>Reformierens von Benzinkohlenwasserstoffen</u>

Bekanntlich ist die erwünschte Aktivität eines
für das Reformieren von Benzinkohlenwasserstoffen verwendeten Katalysators nur dann gewährleistet, wenn der Katalysator einen bestimmten
Gehalt an Chloriden aufweist. Dies gilt insbesondere für die Bimetallkatalysatoren, die beispielsweise Aluminium- und Platinchlorid auf
einem sauren Silikatträger enthalten. Beim Reformieren stellt sich zwischen den gasförmigen
Benzinkohlenwasserstoffen und den an dem Silikatträger adsorbierten Chloriden ein Gleichgewicht
mit der Nebenwirkung ein, daß mit den Reformierungsprodukten ständig eine geringe Menge der katalytisch wirksamen Chloride aus dem Verfahren
ausgetragen werden. Um der dadurch bewirkten
Aktivitätsminderung des Katalysators zu begegnen,
werden mit den Benzinkohlenwasserstoffen organische Chloride in den Ablauf des Reformierens
eingeschleust.

Geringe Mengen der Chloride, die die Reformierungsprodukte dem Katalysator entziehen, finden sich
in Form von Chlorwasserstoff in ppm-Mengen in
dem an Wasserstoff reichen Abgas der Reformieranlage. Weiter enthält dieses wasserstoffreiche
Abgas noch saure Schwefelverbindungen, wie beispielsweise Schwefelwasserstoff. Da dieses
Abgas jedoch zu Hydrierungen von Kohlenwasserstoffen oder anderen Wasserstoff verbrauchenden

- 2 -

Verfahren in den Raffineriebetrieben eingesetzt wird, kann sein Chlor-Gehalt an sauren Bestandteilen wegen der korrodierenden Wirkung auf Anlageteile nachteilig sein. Außerdem reagiert der Chlorwasserstoff mit dem gegebenenfalls in den Abgasen enthaltenen Ammoniak zu Ammoniumchlorid, das sich in Leitungen oder Ventilen abgelagert und deren Funktion durch zunehmende Krustenbildung stört.

Um diese Nachteile zu vermeiden, ist es bekannt, die Abgase des katalytischen Benzin-Reformierens mit wäßrigen Lösungen alkalisch wirkender Verbindungen zu waschen, wobei beispielsweise der Chlorwasserstoff mit dem Kation der alkalisch wirkenden Verbindung ein neutrales Chlorid bildet. Das auf diese Weise gewaschene wasserstoffreiche Gas fällt jedoch aus dieser Reinigung im feuchten Zustand an und muß für viele Anwendungszwecke unter zusätzlichem technischen Aufwand getrocknet werden. Die zweite bekannte Möglichkeit der Eliminierung von Chlorwasserstoff aus diesen Abgasen besteht in der Kontaktierung dieser Abgase mit Molekularsieben oder Aluminiumoxiden, die Chlorwasserstoff zu adsorbieren vermögen. Da die Abgase aber auch aromatische Verbindungen enthalten, die in verhältnismäßig kurzer Betriebszeit die Oberflächenporen der genannten Adsorptionsmittel verlegen, muß das verwendete Adsorptionsmittel in kurzen Zeitabständen erneuert oder unter zusätzlichem technischen Aufwand regeneriert werden.

- 3 -

Hieraus stellt sich die Aufgabe, nach anderen und technisch einfacheren Möglichkeiten zum Entfernen des Chlorwasserstoffs aus den Abgasen des katalytischen Reformierens von Benzinkohlenwasserstoffen zu suchen.

Es wurde ein Verfahren zum Eliminieren von sauren Gasen aus den wasserstoffreichen Abgasen des katalytischen Reformierens von Benzinkohlenwasserstoffen unter Verwendung von Alkoholen gefunden. Danach wird in den Strom des Abgases bei einer Temperatur von 10 bis 50°C und einem Druck von > 0 bis 25 bar eine auf einer Temperatur von 30 bis 50°C gehaltene Lösung von 10 bis 80 Gew.-% Diäthanolamin in einem Alkohol bzw. Alkoholgemisch mit einem Siedepunkt von 180 bis 300°C injiziert und nach einer Verweilzeit von 0,5 bis 7,0 sec in einem eine Füllkörperschicht enthaltenden Abscheider wieder davon getrennt.

Besonders bewährt hat es sich, wenn die Lösung des Diäthanolamins Triäthylenglycol als alkoholisches Lösungsmittel enthält.

Die zur Durchführung des Verfahrens der Erfindung notwendige Lösung von Diäthanolamin in den Alkoholen, insbesondere in Triäthylenglycol, kann aus Produkten technischer Reinheit in an sich bekannter Weise bereitet werden, indem das vorzugsweise geschmolzene Diäthanolamin in die entsprechende Menge des bzw. der Alkohole eingerührt wird, bis eine klare Lösung entstanden ist. In dieser Lösung, die das Diäthanolamin

- 4 -

in einer Konzentration von 10 bis 40 Gew.-% enthalten soll, wird eine Temperatur von 3ᴜ bis 50°C, beispielsweise durch Wärmetausch, eingestellt.

Diese Lösung wird mengengeregelt, vorteilhaft über eine Kolbenpumpe mittels einer Druckdüse, in eine Leitung injiziert, durch die das zu behandelnde Abgas dem Abscheider zugeführt wird. Die Injektion erfolgt dabei vorteilhaft in Strömungsrichtung des Abgasstromes. Die Neutralisationswirkung der in den Abgasstrom eingedüsten Lösung kann hierbei verbessert werden, wenn in Strömungsrichtung des Abgases hinter der Injektionsstelle noch eine Einrichtung installiert ist, die die injizierte Flüssigkeit in dem Gasstrom nochmals möglichst fein verteilt. Die Neutralisation der zu behandelnden Abgase läßt sich außerdem verbessern, wenn ein Teil, vorzugsweise die Hälfte der Diäthanolaminlösung, in die Mitte des Abscheiderbettes eingespeist wird. Die Menge der zu injizierenden Lösung ist abhängig von der Konzentration des Diäthanolamins in der Lösung und von dem Chlorwasserstoffgehalt des zu behandelnden Gases. Vorteilhaft soll die Lösung des Diäthanolamins in dem Alkohol in einer Menge in den Gasstrom injiziert werden, die der 8.000- bis 10.000-fachen Menge an Diäthanolamin entspricht, welche zur Bindung des in dem Gasstrom enthaltenen Chlorwasserstoffs theoretisch erforderlich ist. Die injizierte Lösung soll für die Dauer von 0,5 bis 7,0 sec in dem Gasstrom verbleiben. Diese Verweilzeit wird durch die Länge der Leitung von dem Injektionsort bis zum Eintritt in den Abscheider und von der Geschwindigkeit des Gasstromes bestimmt.

- 5 -

Da das Diäthanolamin in verhältnismäßig großem
Überschuß eingesetzt wird, ist es vorteilhaft,
die Absorptionslösung mehrmals mit dem zu behandelndem Abgas zu kontaktieren. Wenn dabei auch
durch die Umsetzung des Diäthanolamins, beispielsweise zu Diäthanolaminhydrochlorid, die Diäthanolaminkonzentration in der Absorptionslösung sinkt,
so hat das auf die angestrebte Wirkung keinen
Einfluß, wenn dabei die Konzentration des Diäthanolamins in der Lösung nicht unter 10 Gew.-% sinkt.
Zur mehrmaligen Anwendung der Absorptionslösung
wird diese aus dem Sumpf des Abscheiders abgezogen
und vorteilhaft nach Korrektur der Temperatur
mengengeregelt erneut in den Gasstrom injiziert.
Die Absorptionslösung ist für den technischen
Einsatz gemäß der Erfindung erschöpft, wenn die
ersten Spuren saurer Bestandteile in dem aus dem
Abscheider abziehenden Gasstrom festzustellen
sind. Es kann dann frisches Diäthanolamin in dieser Lösung gelöst werden.

Zur Durchführung des Verfahrens der Erfindung
wird vorteilhaft die in der Figur schematisch
dargestellte Vorrichtung benutzt. Durch Leitung 1
wird in den unteren Teil des eine Füllkörperschicht
enthaltenden Abscheiders 2 das von Chlorwasserstoff
zu befreiende Abgas aus der Benzinreformierung
eingeleitet, das in dem Abscheider 2 die Füllkörperschicht durchströmt und den Abscheider 2
durch Leitung 3 wieder verläßt. Die abgetrennte
Absorptionslösung wird aus dem Sumpf 4 des Abscheiders 2 mittels Pumpe 6 durch Leitung 5

- 6 -

abgezogen und über die Regeleinrichtung 7, den Wärmetauscher 8, durch Leitung 9 in die Leitung 1 hinein injiziert. Der Wärmetauscher 8 weist außerdem eine Zuleitung 10 für Dampf und eine Ableitung 11 für Kondensat auf. Als Füllkörper enthält der Abscheider 2 vorteilhaft Keramikringe oder -füllkörper. Durch Leitung 12 kann in die Mitte der Füllkörperschicht ein Teil der Diäthanolaminlösung eingeführt werden.

Die aus dem Abscheider 2 über Kopf abziehenden wasserstoffreichen Gase sind praktisch frei von Wasser, Chlorwasserstoff und anderen sauren Bestandteilen. Diese wasserstoffreichen Gase können auch für alle Zwecke eingesetzt werden, für die bisher nur der durch Steamreforming aus Kohlenwasserstoffen erzeugte Wasserstoff verwendet werden konnte.

Beispiel

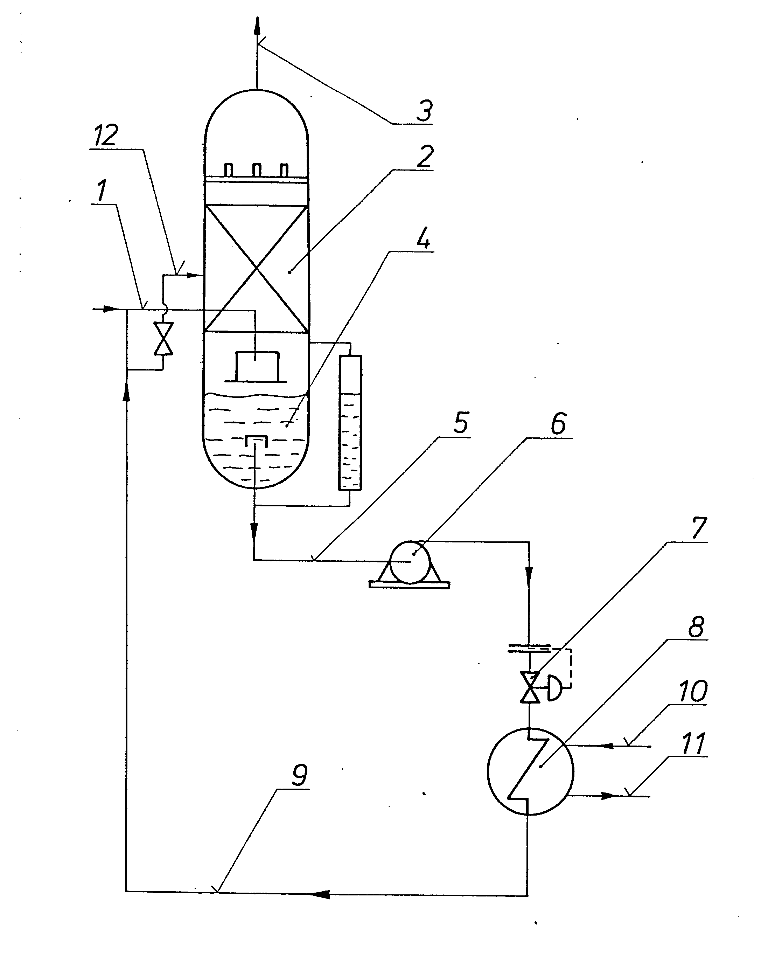

Durch eine Anlage gemäß Figur 1 werden 40 m$^3$/h
an wasserstoffreichen Abgasen mit einer Temperatur
von 12$^o$C und unter einem Druck von 8,2 bar hindurchgeleitet, die 5 ppm an HCl enthalten. In den dem
Abscheider zustrebenden Gasstrom werden 250 cm$^3$/h
einer auf eine Temperatur von 20$^o$C eingestellten
20 %igen Lösung von Diäthanolamin in Triäthylenglycol mit einem geringen Überdruck eingedüst.
Die Länge des Rohres von der Düse bis zum Eintritt
in den Abscheider ist so bemessen, daß das mit
der Diäthanolaminlösung beaufschlagte Gas den Abscheider nach 0,9 sec erreicht. Die Füllkörperschicht in dem Abscheider hat einen Durchmesser
von 10 cm und eine Länge von 60 cm.

In dem aus dem Abscheider abgezogenen Gas läßt
sich mit Hilfe eines für Chlorwasserstoffsäure
spezifischen Trägerröhrchens keine Chlorwasserstoffsäure mehr nachweisen.

- 8 -

P a t e n t a n s p r ü c h e

1. Verfahren zum Eliminieren von sauren Gasen aus den wasserstoffreichen Abgasen des katalytischen Reformierens von Benzinkohlenwasserstoffen unter Verwendung von Alkoholen, dadurch gekennzeichnet, daß in den Strom des Abgases bei einer Temperatur von 10 bis 50°C und einem Druck von <0 bis 25 bar eine auf einer Temperatur von 30 bis 50°C gehaltenen Lösung von 10 bis 80 Gew.-% Diäthanolamin in einem Alkohol bzw. Alkoholgemisch mit einem Siedepunkt von 180 bis 300°C injiziert und nach einer Verweilzeit von 0,5 bis 7,0 sec in einem eine Füllkörperschicht enthaltenden Abscheider wieder davon getrennt wird.

2. Verfahren nach Anspruch 1, dadurch gekennzeichnet, daß die Lösung des Diäthanolamins Triäthylenglycol als alkoholisches Lösungsmittel enthält.

3. Verfahren nach Ansprüchen 1 bis 2, dadurch gekennzeichnet, daß die Lösung des Diäthanolamins im Alkohol in einer Menge in den Gasstrom injiziert wird, die der 8.000- bis 10.000-fachen Menge an Diäthanolamin entspricht, welche zur Bindung des in dem Gasstrom enthaltenen Chlorwasserstoffs theoretisch erforderlich ist.

4. Verfahren nach Ansprüchen 1 bis 3, dadurch gekennzeichnet, daß aus dem Sumpf des Abscheiders die Lösung des Diäthanolamins in Alkohol abgezogen und mengengeregelt erneut in den Gasstrom injiziert wird.

0033460

**Europäisches Patentamt**

## EUROPÄISCHER RECHERCHENBERICHT

EP 81 10 0337.5

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE - C - 711 961 (BÖHME FETTCHEMIE)<br>* Anspruch *<br>-- | 1 | B 01 D 53/34 |
| | DE - C - 743 088 (F.J. COLLIN AG)<br>* Anspruch; Seite 1, Zeilen 1 bis 9;<br>Fig. *<br>-- | 1,4 | |
| | DE - B2 - 1 815 137 (METALLGESELL-<br>SCHAFT)<br>* Anspruch 1; Spalte 3, Zeilen 52 bis<br>53 *<br>-- | 1,2 | **RECHERCHIERTE SACHGEBIETE (Int. Cl.³)** |
| | DE - A1 - 2 443 016 (SIEMENS)<br>* Ansprüche 1, 2, Seite 3,<br>Absatz 2 *<br>-- | 1 | B 01 D   53/34<br>C 10 K   1/14<br>C 10 K   1/16<br>C 10 K   1/18 |
| | DE - A1 - 2 616 620 (UNITED AIR<br>SPECIALISTS)<br>* Anspruch 1 *<br>-- | 1 | |
| | DE - A1 - 2 702 515 (E.I. DU PONT DE<br>NEMOURS)<br>* Anspruch 1; Seite 9, Absatz 2 *<br>-- | 1,4 | **KATEGORIE DER GENANNTEN DOKUMENTE** |
| | AT - B - 220 606 (W. MULL et al.)<br>* Anspruch; Seite 1, Zeilen 4, 5, 30 *<br>-- | 1,4 | X: von besonderer Bedeutung<br>A: technologischer Hintergrund<br>O: nichtschriftliche Offenbarung<br>P: Zwischenliteratur |
| | GB - A - 820 206 (W. MULL et al.)<br>* Anspruch 1 *<br>--<br>./.. | 1,4 | T: der Erfindung zugrunde<br>liegende Theorien oder<br>Grundsätze<br>E: kollidierende Anmeldung<br>D: in der Anmeldung angeführtes<br>Dokument<br>L: aus andern Gründen<br>angeführtes Dokument |

| X | Der vorliegende Recherchenbericht wurde für alle Patentansprüche erstellt. | &: Mitglied der gleichen Patent-<br>familie, übereinstimmendes<br>Dokument |
|---|---|---|

| Recherchenort | Abschlußdatum der Recherche | Prüfer |
|---|---|---|
| Berlin | 28-04-1981 | KÜHN |

EPA form 1503.1  06.78

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| P | DE - A1 - 2 847 591 (STADTWERKE DÜSSELDORF) * Anspruch 1 * | 1 |
| A | DE - A - 2 022 826 (METALLGESELLSCHAFT) * Anspruch 1 * | |
| A | US - A - 2 860 030 (PHILLIPS PETROLEUM CO.) * Ansprüche 9, 10 * | |

KLASSIFIKATION DER ANMELDUNG (Int. Cl.³)

RECHERCHIERTE SACHGEBIETE (Int. Cl.³)

EPA Form 1503.2  06.78